# EUROPÄISCHE PATENTSCHRIFT

(11) **EP 1 510 092 B1**
(45) Veröffentlichungstag und Bekanntmachung des Hinweises auf die Patenterteilung: **15.03.2006**
(21) Anmeldenummer: 03755894.7
(22) Anmeldetag: 14.05.2003
(51) Int. Cl.: H04Q 7/32

(54) **VERFAHREN UND VORRICHTUNG ZUM STEUERN VON KOMBINIERTEN UMTS/GSM/EDGE-FUNKSYSTEMEN**
METHOD AND DEVICE FOR CONTROLLING COMBINED UMTS/GSM/EDGE RADIO SYSTEMS
PROCEDE ET DISPOSITIF DE COMMANDE DE SYSTEMES DE RADIOCOMMUNICATION COMBINES UMTS/GSM/EDGE

(30) Priorität: 04.06.2002 DE 10224798
(43) Veröffentlichungstag der Anmeldung: 02.03.2005
(73) Patentinhaber: Infineon Technologies AG, 81669 München (DE)
(72) Erfinder: GUNZELMANN, Bertram, 86343 Königsbrunn (DE); PILGRAM, Berndt, 80798 München (DE); WENZEL, Dietmar, 81549 München (DE)
(74) Vertreter: Graf Lambsdorff, Matthias
(86) Internationale Anmeldenummer: PCT/DE2003/001555
(87) Internationale Veröffentlichungsnummer: WO 2003/103315

(56) Entgegenhaltungen:
- EP-A- 0 966 116
- EP-A- 1 271 977
- WO-A-02/01887

## Beschreibung

Die Erfindung betrifft ein Verfahren zum Steuern von Funksystemen in einer Funkstation, insbesondere einer Mobilfunkstation, wobei die Funkstation zum Senden/Empfangen von Signalen von zumindest zwei Funkstandards mit differierenden Zeitrastern ausgelegt ist. Des Weiteren betrifft die Erfindung eine Vorrichtung zum Steuern von Funksystemen in einer Funkstation.

In Sende- und Empfangseinrichtungen von Mobilstationen sind eine Vielzahl von Aktionen auszulösen und Steuersignale zu erzeugen, die zeitlich mit einem speziellen, Mobilfunkstandard-spezifischen Zeitraster korreliert sind.

In den letzten Jahren haben sich im Mobilfunkbereich eine Reihe unterschiedlicher Standards etabliert, die fortentwickelt oder in Zukunft durch neue Standards ersetzt werden. Bekannte Beispiele für Mobilfunkstandards sind GSM (Global System for Mobile Communication), die als EDGE-(Enhanced Data Services for GSM Evolution-)Standard bezeichnete 8 PSK-(8-Phase Shift Keying-)Weiterentwicklung von GSM, sowie verschiedene auf dem Übertragungsverfahren CDMA (Code Division Multiple Access) basierende Standards wie beispielsweise UMTS (Universal Mobile Telecommunication System). Mit MBS (Mobile Broad Band System) ist derzeit bereits ein Mobilfunkstandard der vierten Generation in der Entwicklung.

Mit dem Vorhandensein von unterschiedlichen bzw. konkurrierenden Standards wachsen die Anforderungen an Mobilstationen für den Mobilfunk. Gewünscht werden Mobilstationen, die mehrere Mobilfunksysteme bzw. -standards gleichzeitig unterstützen können. Dies setzt voraus, dass die Mobilstation die unterschiedlichen Zeitraster der einzelnen Standards erzeugen und darauf basierend geeignete Ereignissteuerungsprozesse durchzuführen vermag.

Die Übertragungsverfahren, beispielsweise CDMA und TDMA, dieser beiden unterschiedlichen Mobilfunkstandards beruhen auf unterschiedlichen Symboltaktfrequenzen, wobei die übertragenen Daten üblicherweise in Übertragungsrahmen strukturiert sind, die eine jeweils vorgegebene Länge haben. Diese Struktur und/oder Länge jedes Übertragungsrahmens in einer kontinuierlichen Signalfolge ist vorgegeben und wird durch die Mobilstation erkannt. Die Mobilstation muss ihre zeitliche Ablaufsteuerung auf diese Struktur ausrichten. Dabei tritt die Schwierigkeit auf, dass unterschiedliche Mobilfunkstandards in der Regel inkommensurable Zeitraster verwenden, d.h. die Zeitraster können in der Regel nicht durch eine einfache Taktteilung ineinander übergeführt werden. Insbesondere in zellularen Mobilfunksystemen muss die Mobilstation auch weitere, über das Senden und Empfangen von Daten hinausgehende Funktionen ausführen, die zumindest beim Betrieb nur einer einzigen Empfangseinrichtung nicht gleichzeitig ausgeführt werden können. Beispielsweise muss eine Mobilstation, welche mehrere Mobilfunkstandards unterstützt, in einem zellular aufgebauten FunkKommunikationssystem, in dem die Basisstation verschiedener Zellen auf unterschiedlichen Frequenzen senden, von Zeit zu Zeit messen, ob sie Funksignale von einer anderen Basisstation mit ausreichender Empfangsqualität empfangen kann. Hierzu stellt die Mobilstation ihre Empfangseinrichtung auf eine andere Frequenz als diejenige Frequenz ein, auf der sie zum momentanen Zeitpunkt Daten empfängt. Die Daten werden dabei beispielsweise in einem UMTS-System von einer Basisstation zu einer empfangenden Mobilstation gesendet, indem die Übertragung zu vorgegebenen Zeitpunkten so unterbrochen wird, dass es der empfangenden Mobilstation möglich ist, während einer oder mehrerer Unterbrechungsphasen, andere Funktionen, wie beispielsweise Nachbarkanalsuche (Suche nach bestimmten, von einer benachbarten Basisstation ausgesendeten Datenpaketen), auszuführen und insbesondere auch um Messungen durchzuführen. Um einen Datenverlust zu vermeiden, sendet die Basisstation die Daten zuvor mit einer gegenüber der im Allgemeinen konstanten Dauerübertragungsrate erhöhten Übertragungsrate. Damit diese überhöhte Übertragungsrate nicht zu höheren Bitfehlerraten führt, wird zusätzlich während dieser Zeitdauer, in welcher mit erhöhter Übertragungsrate Daten übertragen werden, die Sendeleistung erhöht.

Die Häufigkeit, mit der die Unterbrechungsphasen wiederholt werden, sowie die Zeitdauer der Unterbrechungsphasen hängen vom jeweiligen Funksystem und auch vom jeweiligen Betriebszustand dieses Funksystems ab. Nachteilig dabei ist es, dass mit steigender Anzahl dieser eingefügten Unterbrechungsphasen zum einen die Sendeleistung höher ist und zum anderen die Übertragungsqualität vermindert wird.

Die Druckschrift EP 0 966 116 A2 beschreibt eine Vorrichtung und ein zugehöriges Verfahren zum Synchronisieren einer Mobilstation in einem Funkkommunikationssystem. Die Mobilstation ist für das Senden und Empfangen von Signalen zweier verschiedener Funkstandards mit differierenden Zeitrastern ausgelegt. In der Mobilstation kann ein relativer zeitlicher Offset zwischen den von einer Basisstation ausgesandten Synchronisationssignalen der beiden Funkstandards bestimmt werden. Aufgrund dieser Bestimmung kann die Mobilstation in zeitlicher Synchronisation mit den Signalen eines Funkstandards gebracht werden.

Die Druckschrift WO 02/01887 A2 beschreibt ein Verfahren zur Synchronisation einer Mobilstation, während diese in einem dedizierten GSM-Modus arbeitet. Die Mobilstation sendet Sprachsignale an eine Basisstation und empfängt Sprachsignale von der Basisstation. Ein Sprachaktivitätsdetektor übermittelt eine Kontrollinformation, welche die Sprachaktivität an der Mobilstation anzeigt und ein Entzerrer identifiziert und verarbeitet eine Trainingssequenz und übermittelt eine Information entsprechend der Trainingssequenz. Eine physikalische Schicht-Schnittstelle bestimmt dann auf der Basis der Kontrollinformation von dem Sprachaktivitätsdetektor, ob die Mobilstation einen diskontinuierlichen Transmissions-Modus verwendet, und bestimmt auf der Basis der Korrelationsinformation von dem Entzerrer, ob die Basisstation einen diskontinuierlichen Transmissions-Modus verwendet. Die Synchronisation wird als Antwort auf die Verwendung des diskontinuierlichen Transmissions-Modus durch die Mobilstation und die Basisstation durchgeführt.

Aufgabe der Erfindung ist es, ein Verfahren und eine Vorrichtung zur Steuerung von Funksystemen in einer Funkstation zu schaffen, mit welcher der Aufwand für die Synchronisierung unterschiedliche Zeitraster minimiert werden kann.

Diese Aufgabe wird durch ein Verfahren und eine Vorrichtung mit den Merkmalen der entsprechenden unabhängigen Patentansprüche gelöst.

Bei einem erfindungsgemäßen Verfahren zum Steuern von Funksystemen in einer Mobilfunkstation werden durch die Funkstation zumindest zwei Funkstandards mit differierenden Zeitrastern unterstützt. In jedem der Funksysteme werden Signale eines Funkstandards verarbeitet. Im ersten und/oder zweiten Funksystem wird jeweils zumindest ein Synchronisationssignal erzeugt und das Synchronisationssignal an das jeweils andere Funksystem übertragen. In jeweils demjenigen Funksystem, an das das Synchronisationssignal des anderen Funksystems übertragen wird, wird ein Speichern einer eigenen Systeminformation zum Synchronisieren der Funksysteme durchgeführt.
Vorteilhaft ist es, dass der Zeitpunkt, zu dem das Speichern von Systeminformationen in einem der Funksysteme beginnt, durch das andere Funksystem mittels des Synchronisationssignals vorgegeben wird. Dadurch kann zu definierten Zeitpunkten des einen Funksystems ein zeitgenaues Abspeichern von Systeminformationen in dem anderen Funksystem eingeleitet werden.

In einem bevorzugten Ausführungsbeispiel wird das von einem Funksystem erzeugte Synchronisationssignal an eine Zeitsteuereinheit, in dem anderen Funksystem angelegt und die Systeminformationen in einer Speichereinheit dieser Steuereinheit abgespeichert. In vorteilhafter Weise werden die Synchronisationssignale jedes Funksystems in jeweils einem Synchronisationssignalgenerator, erzeugt. Bevorzugt wird dieser Signalgenerator sowie das Erzeugen des Synchronisationssignals in einem Funksystem durch die diesem Funksystem zugeordnete Steuereinheit gesteuert. Dadurch kann erreicht werden, dass die Synchronisation der Funksysteme, insbesondere der jeweiligen Steuereinheiten, schnell und in einfacher Weise erreicht werden kann.

In einem besonders bevorzugten Ausführungsbeispiel wird die zu einem vom ersten Funksystem vorgegebenen Zeitpunkt in dem zweiten Funksystem abgespeicherte Systeminformation des zweiten Funksystems vom ersten Funksystem gelesen und in vorteilhafter Weise können mittels dieser gelesenen Systeminformation des zweiten Funksystems in dem ersten Funksystem Zeitpunkte zum Datenaustausch der Funkstation mit anderen Funkstationen von Signalen des ersten Funksystems ermittelt werden. Dadurch kann erreicht werden, dass eine Übertragungsphase eines Funksystems, welche durch die Systeminformationen charakterisiert wird, zu definierten Zeitpunkten des anderen Funksystems von diesem anderen Funksystem abgefragt werden können. Somit kann in dem abfragenden Funksystem der Beginn und/oder das Ende einer Unterbrechungsphase in dem abgefragten Funksystem durch das abfragende Funksystem ermittelt werden.

In vorteilhafter Weise ist als Systeminformation die Rahmennummer des Übertragungsrahmens zum Übertragen von Daten und/oder eine Nummer eines Zeitschlitzes, die einem Übertragungsrahmen zugeordnet ist und/oder die Nummer einer Einheit, in die ein Zeitschlitz unterteilt wird, abgespeichert.

In einem vorteilhaften Ausführungsbeispiel wird im ersten und/oder im zweiten Funksystem jeweils ein zweites Synchronisationssignal erzeugt. Dieses zweite Synchronisationssignal wird an das jeweils andere Funksystem angelegt, und in diesem jeweils anderen Funksystem wird zu einem, durch das anliegende zweite Synchronisationssignal vorgebbaren Zeitpunkt des Funksystems, welches dieses zweite Synchronisationssignal erzeugt, das Senden von Funksignalen oder das Erzeugen von Ereignissen im Funksystem, an das das zweite Synchronisationssignal angelegt wird, freigegeben oder gesperrt. Dadurch kann eine optimale Ablaufsteuerung von Synchronisationsvorgängen und eine optimale Ereignissteuerung der Funksysteme erreicht werden. Es kann dadurch verhindert werden, dass beide Funksysteme gleichzeitig Signale senden.

Vorteilhaft ist es, wenn die zweiten Synchronisationssignale in den jeweiligen Signalgeneratoren der Funksysteme erzeugt werden und an die Signalgeneratoren des jeweils anderen Funksystems angelegt werden. Es kann auch vorgesehen sein, das erste und das zweite Synchronisationssignal eines Funksystems in ein einziges Synchronisationssignal zusammenzufassen und die Informationen zum Synchronisieren und die Informationen zum Freigeben oder Sperren eines Sendevorgangs zu codieren. Dadurch kann erreicht werden, dass durch ein einziges Signal gleichzeitig das Einleiten eines Speichervorgangs einer Systeminformation und das Freigeben oder Sperren eines Sendevorgangs in einem Funksystem durch das andere Funksystem gesteuert wird.

Vorteilhaft ist das Verfahren besonders dann, wenn die Funkstation die beiden Mobilfunkstandards UMTS und GSM/EDGE unterstützt.

Eine erfindungsgemäße Vorrichtung zum Steuern von Funksystemen in einer Funkstation, insbesondere einer Mobilfunkstation, wobei die Funkstation zum Senden/Empfangen von Signalen von zumindest zwei Funkstandards mit differierenden Zeitrastern ausgelegt ist, weist eine erste Steuereinheit, insbesondere eine erste Zeitsteuereinheit und einen dieser ersten Steuereinheit nachgeschalteten ersten Signalgenerator, insbesondere einen ersten Synchronisationssignalgenerator, auf. Diese erste Steuereinheit und dieser erste Signalgenerator zur Erzeugung zumindest eines ersten Synchronisationssignals des ersten Funksystems sind dem ersten Funksystem zugeordnet. Eine zweite Zeitsteuereinheit und ein dieser zweiten Steuereinheit nachgeschalteter zweiter Synchronisationssignalgenerator, zur Erzeugung zumindest eines ersten Synchronisationssignals des zweiten Funksystems, sind dem zweiten Funksystem zugeordnet. Die erste und die zweite Steuereinheit weisen jeweils zumindest eine Speichereinheit auf. Der erste Signalgenerator ist mit dem zweiten Funksystem und der zweite Signalgenerator mit dem ersten Funksystem elektrisch verbunden. Durch die erfindungsgemäße Vorrichtung können die Funksysteme synchronisiert werden und gegebenenfalls die Unterbrechungsphasen der Funksysteme in ihrer zeitlichen Dauer sowie in ihrer Anzahl minimiert werden.

In vorteilhafter Weise weist zumindest in einem Funksystem die Steuereinheit eine zweite Speichereinheit auf, wobei in der ersten Speichereinheit dieser Steuereinheit eine Systeminformation des Datenempfangspfades und in dieser zweiten Speichereinheit eine Systeminformation des Datensendepfades speicherbar ist. Dadurch können die Systeminformationen des Datenempfangspfades und des Datensendepfades eines Funksystems separiert abgespeichert werden.

In einem bevorzugten Ausführungsbeispiel ist der erste Signalgenerator mit einem ersten Eingang des zweiten Signalgenerators und mit der zweiten Steuereinheit des zweiten Funksystems verbunden, wobei er dabei eine elektrische Verbindung zumindest mit der ersten Speichereinheit des zweiten Funksystems auf weist. Der zweite Signalgenerator ist mit einem Eingang des ersten Signalgenerators und mit der ersten Speichereinheit des ersten Funksystems, elektrisch verbunden. Dadurch ist es durch entsprechende Steuersignale, insbesondere Synchronisationssignale möglich, dass der zweite Signalgenerator durch den ersten Signalgenerator oder der erste Signalgenerator durch den zweiten Signalgenerator aktivierbar oder deaktivierbar ist oder Systemereignisse des ersten Funksystems durch den zweiten Signalgenerator oder Systemereignisse des zweiten Funksystems durch den ersten Signalgenerator freigegeben oder gesperrt werden können.

Vorteilhaft ist es, dass die Funksysteme durch eine elektrische Verbindung, insbesondere eine synchrone serielle Schnittstelle, verbunden sind, über welche Systeminformationen, insbesondere der Inhalt der Speichereinheiten des einen Funksystems durch das andere Funksystem lesbar und auswertbar sind. Dadurch kann in einfacher Weise der Beginn oder das Ende einer Unterbrechungsphase in einem Funksystem durch das andere Funksystem ermittelt werden.

Weitere vorteilhafte Ausgestaltungen der Erfindung sind in den Unteransprüchen angegeben.

Nachfolgend wird ein Ausführungsbeispiel der Erfindung anhand schematischer Zeichnungen näher erläutert. Es zeigen:

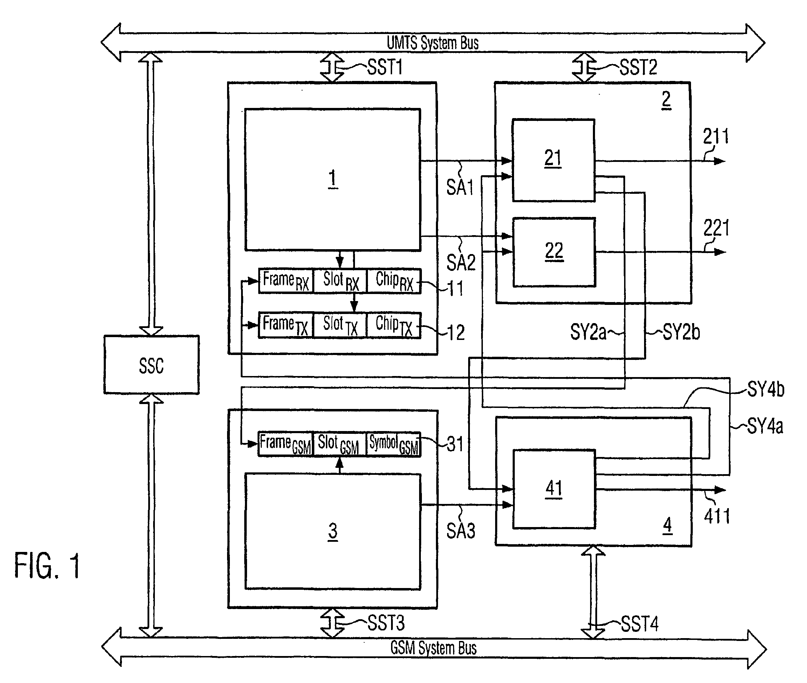

- Fig. 1: ein Blockschaltbild einer erfindungsgemäßen Vorrichtung;
- Fig. 2: ein Zeitdiagramm eines Abspeichervorgangs von Systeminformationen;
- Fig. 3: ein Zeitdiagramm eines Freigebens oder Sperrens von Systemereignissen.

Die erfindungsgemäße Vorrichtung und das erfindungsgemäße Verfahren werden im Ausführungsbeispiel anhand einer Mobilstation, welche die beiden Mobilfunkstandards UMTS und GSM/EDGE unterstützt, beschrieben. Die erfindungsgemäße Vorrichtung weist eine UMTS-Zeitsteuereinheit 1 auf, die mit Speichereinheiten 11 und 12 verbunden ist. Die UMTS-Zeitsteuereinheit 1 und die beiden Speichereinheiten 11 und 12 sind über eine Schnittstelle SST1 mit dem UMTS-Bus-System elektrisch verbunden. Die UMTS-Zeitsteuereinheit 1 steuert einen nachgeschalteten Signalgenerator, welcher im Ausführungsbeispiel als Synchronisationssignalgenerator 2 ausgeführt ist. Der Synchronisationssignalgenerator 2 weist eine Einheit 21 auf, in der Ereignisse für den UMTS-Sendepfad erzeugt werden. Die Einheit 21 wird durch das Steuersignal SA1 der UMTS-Zeitsteuereinheit 1 gesteuert. Des Weiteren weist der Synchronisationssignalgenerator 2 eine Einheit 22 zur Erzeugung von Ereignissen für den UMTS-Empfangspfad auf, welche durch ein Steuersignal SA2 der UMTS-Zeitsteuereinheit 1 gesteuert wird. Der Synchronisationssignalgenerator 2 ist über eine Schnittstelle SST2 mit dem UMTS-Bus-System elektrisch verbunden. Die UMTS-Zeitsteuereinheit 1, die Speichereinheiten 11 und 12 und der Synchronisationssignalgenerator 2 mit seinen Einheiten 21 und 22 sind dem UMTS-Funksystem zugeordnet.

Des Weiteren weist die Vorrichtung eine GSM-Zeitsteuereinheit 3 auf, die mit einer Speichereinheit 31 verbunden ist. Die GSM-Zeitsteuereinheit 3 und die Speichereinheit 31 sind über eine Schnittstelle SST3 mit dem GSM-Bus-System elektrisch verbunden. Die Vorrichtung weist einen zweiten Signalgenerator, welcher im Ausführungsbeispiel als Synchronisationssignalgenerator 4 mit einer Einheit 41 zum Erzeugen der Ereignisse des GSM-Sende- und GSM-Empfangspfads ausgeführt ist, auf. Der zweite Synchronisationssignalgenerator 4 ist über eine Schnittstelle SST4 mit dem GSM-Bus-System verbunden. Der Synchronisationssignalgenerator 4 bzw. die Einheit 41 wird über ein Steuersignal SA3 durch die GSM-Zeitsteuereinheit 3 gesteuert. Die in der Einheit 41 erzeugten Ereignisse des GSM-Sende- oder GSM-Empfangspfads werden mittels des Signals 411 übertragen. Der Synchronisationssignalgenerator 4 bzw. die Einheit 41 erzeugt ein erstes Synchronisationssignal SY4a, welches an den Speichereinheiten 11 und 12 des UMTS-Funksystems anliegt. Die Einheit 41 erzeugt ein zweites Synchronisationssignal SY4b, welches an den Einheiten 21 und 22 des Synchronisationssignalgenerators 2 des UMTS-Funksystems anliegt. Die in der Einheit 21 erzeugten Ereignisse des UMTS-Sendepfads werden über das Signal 211 übertragen. Die durch die Einheit 22 erzeugten Ereignisse des UMTS-Empfangspfads werden durch das Signal 221 übertragen. Die Einheit 21 erzeugt ein erstes Synchronisationssignal SY2a des UMTS-Funksystems, welches an der Speichereinheit 31 des GSM-Funksystems anliegt. Die Einheit 21 erzeugt ein zweites Synchronisationssignal SY2b, welches an einem Eingang des Synchronisatiossignalgenerators 4 bzw. der Einheit 41 anliegt.

Die Vorrichtung weist darüber hinaus eine synchrone serielle Verbindung SSC auf, mit der das GSM-Funksystem den Inhalt der Speichereinheiten 11 und 12 des UMTS-Systems oder das UMTS-System den Inhalt der Speichereinheit 31 des GSM-Funksystems lesen kann. In der Speichereinheit 11 des UMTS-Systems sind Systeminformationen für den Empfangspfad und in der Speichereinheit 12 sind Systeminformationen des Sendepfads des UMTS-Systems gespeichert. In der Speichereinheit 31 des GSM-Systems sind Systeminformationen des GSM-Systems gespeichert. Die Speichereinheiten 11, 12 und 31 sind im Ausführungsbeispiel als separate externe Speichereinheiten dargestellt. Es kann auch vorgesehen sein, dass die Speichereinheiten 11 und 12 in der UMTS-Zeitsteuereinheit 1 und/oder die Speichereinheit 31 in der GSM-Zeitsteuereinheit 3 angeordnet sind.

Im Ausführungsbeispiel werden in den Speichereinheiten 11 und 12 des UMTS-Funksystems als Systeminformationen die Rahmennummer des Übertragungsrahmens zum Übertragen von Daten Frame_{RX}, Frame_{TX}, eine Nummer eines Zeitschlitzes Slot_{RX}, Slot_{TX}, der den entsprechenden Übertragungsrahmen Frame_{RX} bzw. Frame_{TX} zugeordnet ist bzw. in die ein Übertragungsrahmen unterteilt ist, sowie die Chipnummer Chip_{RX}, Chip_{TX}, in die die Zeitschlitze Slot_{RX} bzw. Slot_{TX} unterteilt sind, abgespeichert. In der Speichereinheit 31 sind als Systeminformation des GSM-Funksystems die Rahmennummer Frame_{GSM} des Datenübertragungsrahmens, die Nummer eines Zeitschlitzes Slot_{GSM}, der dem Übertragungsrahmen Frame_{GSM} zugeordnet ist sowie die GSM-Symbolnummer Symbol_{GSM}, in die der Zeitschlitz Slot_{GSM} unterteilt ist, abgespeichert. Durch das Anlegen des ersten Synchronisationssignals SY4a des Synchronisationssignalgenerators 4 an die Speichereinheiten 11 und 12 werden die UMTS-Systeminformationen des Empfangspfads bzw. des Sendepfads zu einem, durch das GSM-System vorgegebenen Zeitpunkt in den Speichereinheiten 11 bzw. 12 abgespeichert. Dieses erste Synchronisationssignal SY4a wird in dem Synchronisationssignalgenerator 4 bzw. in der Einheit 41 zu einem bestimmten GSM-Zeitpunkt, welcher durch die zu diesem Zeitpunkt im GSM-System gegebenen Systeminformationen gekennzeichnet ist, generiert. Gleichzeitig oder zeitlich versetzt zur Erzeugung des ersten Synchronisationssignals SY4a wird das zweite Synchronisationssignal SY4b in der Einheit 41 des Signalgenerators 4 erzeugt. Dieses zweite Synchronisationssignal SY4b des GSM-Systems wird an die Einheiten 21 und 22 des Signalgenerators 2 des UMTS-Systems angelegt. Mittels dieses Synchronisationssignals SY4b werden in einer Gruppe zusammengefasste UMTS-Ereignisse, die in den Einheiten 21 und 22 erzeugt werden, freigegeben oder gesperrt. Dadurch können UMTS-Ereignisse zu bestimmten GSM-Zeitpunkten freigegeben oder gesperrt werden.

Durch Anlegen des ersten Synchronisationssignals SY2a des UMTS-Systems, welches in der Einheit 21 des Signalgenerators 2 erzeugt wird, an die Speichereinheit 31, werden die GSM-Systeminformationen zu einem bestimmten UMTS-Zeitpunkt in der Speichereinheit 31 abgespeichert. Dadurch wird die GSM-Systeminformation zu einem bestimmten UMTS-Zeitpunkt, welcher durch die zu diesem Zeitpunkt im UMTS-System gegebenen Systeminformationen gekennzeichnet ist, abgespeichert. Gleichzeitig oder zeitlich versetzt zur Erzeugung des ersten Synchronisationssignals SY2a des UMTS-Systems wird das zweite Synchronisationssignal SY2b durch die Einheit 21 erzeugt und an die Einheit 41 des Synchronisationssignalgenerators 4 angelegt. Durch das zweite Synchronisationssignal SY2b des UMTS-Systems werden in einer Gruppe zusammengefasste GSM-Ereignisse freigegeben oder gesperrt. Diejenigen UMTS-Ereignisse bzw. GSM-Ereignisse, die durch die Synchronisationssignale SY4b bzw. SY2b freigegeben oder gesperrt werden, können durch jeweils spezielle Markierungen in Gruppen zusammengefasst werden. Durch das Anlegen des zweiten Synchronisationssignals SY2b an den Synchronisationssignalgenerator 4 des GSM-Systems kann beispielsweise das Senden von Signalen des GSM-Systems verhindert werden. Dadurch wird sichergestellt, dass das GSM-System in einer Unterbrechungsphase während einer Vermessung einer UMTS-Basisstation keine Signale senden kann.

Nach dem Beenden eines Vermessungsvorganges einer UMTS-Basisstation kann durch das Synchronisationssignal SY2b das Senden von Signalen des GSM-Systems wieder freigegeben werden. Dadurch kann das Freigeben oder Sperren von GSM-Ereignissen vom UMTS-System zu definierten UMTS-Zeitpunkten durchgeführt werden, ohne dass das GSM-System den genauen UMTS-Zeitpunkt, welcher durch die zu diesem Zeitpunkt gegebenen UMTS-Systeminformationen gekennzeichnet ist, kennen muss. Dadurch können GSM-Ereignisse zu bestimmten UMTS-Zeitpunkten, bezogen auf den UMTS-Sendepfad, freigegeben oder gesperrt werden.

In analoger Weise gelten diese Ausführungen zu dem Synchronisationssignal SY2b auch für das Synchronisationssignal SY4b des GSM-Systems.

Es kann auch vorgesehen sein, dass die Synchronisationssignale SY2a und SY2b des UMTS-Systems in ein einziges Synchronisationssignal zusammengefasst werden. Die in den separaten Synchronisationssignalen SY2a und SY2b enthaltenen Informationen müssen bei Vorliegen eines einzigen Synchronisationssignals des UMTS-Systems codiert werden. Ebenso ist es möglich, die beiden Synchronisationssignale SY4a und SY4b des GSM-Systems in ein einziges Synchronisationssignal zusammenzufassen und die in den einzelnen Synchronisationssignalen SY4a bzw. SY4b enthaltenen Informationen zu codieren.

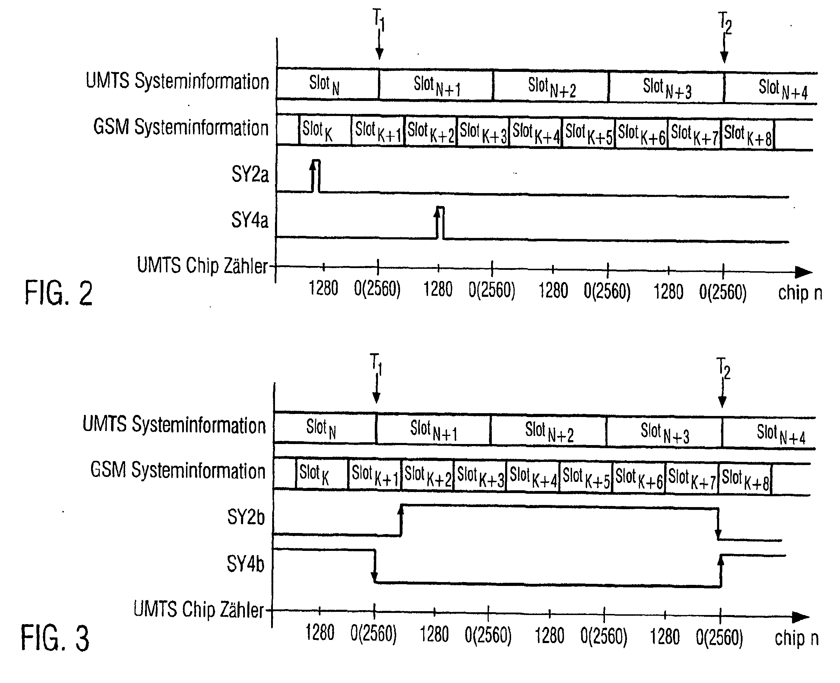

In Fig. 2 ist ein Zeitdiagramm eines Abspeichervorgangs der UMTS-Systeminformation zu einem bestimmten GSM-Zeitpunkt sowie ein Abspeichervorgang der GSM-Systeminformation zu einem bestimmten UMTS-Zeitpunkt dargestellt. Dabei ist insbesondere das Abspeichern der UMTS-Systeminformation mittels dem Synchronisationssignal SY2a sowie der GSM-Systeminformation mittels dem Synchronisationssignal SY4a dargestellt. Das Zeitdiagramm gemäß Fig. 2 zeigt eine UMTSGSM-Synchronisation während einer UMTS-Unterbrechungsphase, deren Beginn durch den Zeitpunkt T₁ und deren Ende durch den Zeitpunkt T₂ gekennzeichnet ist. Die UMTS-Systeminformation ist durch die Rahmennummer des Übertragungsrahmens, die Nummer des Zeitschlitzes und die Nummer eines Chips gegeben und in der Abbildung dargestellt durch die Zeitschlitz-Nummern Slot_{N}, Slot_{N+1} bis Slot_{N+4} mit der entsprechend feineren Unterteilung in Chips mit 2560 Chips pro Zeitschlitz. Die von der UMTS-Systeminformation unabhängige und auf einer anderen Symboltaktfrequenz basierende GSM-Systeminformation ist ebenso durch Rahmennummern der Übertragungsrahmen, der Zeitschlitznummern und der Symbol-Nummer gegeben und in dem Zeitdiagramm in Fig. 2 dargestellt durch Zeitschlitz-Nummern Slot_{K}, Slot_{K+1} bis Slot_{K+8} mit der ebenfalls entsprechend feineren Unterteilung in Symbole mit 156,25 Symbolen pro Zeitschlitz bzw. Slot. Durch den Synchronisationsimpuls SY2a ist die Übernahme der UMTS-Systeminformation (Rahmen-, Zeitschlitz- und Chip-Nummer) in die Speichereinheit 12 der UMTS-Zeitsteuereinheit 1 verdeutlicht. In entsprechender Weise ist durch den Synchronisationsimpuls im Synchronisationssignal SY4a die Übernahme bzw. das Abspeichern der GSM-Systeminformation (Rahmen-, Zeitschlitz- und Symbol-Nummer) in die Speichereinheit 31 der GSM-Zeitsteuereinheit 3 dargestellt. Dadurch können sowohl das GSM-System als auch das UMTS-System die Systeminformationen des jeweils anderen Systems, insbesondere mittels der seriellen synchronen Verbindung SSC lesen und in weiterer Folge per Software vorausberechnen. Aus der zu einem bestimmten GSM-Zeitpunkt abgespeicherten UMTS-Systeminformation kann gemäß dem Zeitdiagramm in Fig. 2 beispielsweise das GSM-System den Zeitpunkt T₂ der UMTS-Unterbrechungsphase voraus berechnen.

Fig. 3 zeigt ein Zeitdiagramm, in dem die Wirkungsweise von in Gruppen zusammengefassten UMTS-Ereignissen durch die GSM-Zeitsteuereinheit 3 bzw. von GSM-Ereignissen durch die UMTS-Zeitsteuereinheit 1 dargestellt ist. Die UMTS- bzw. die GSM-Systeminformationen entsprechen denen in Fig. 2. Die Wirkungsweise der Synchronisationssignale SY2b und SY4b sind wie folgt. Durch das Synchronisationssignal SY2b wird im dargestellten Ausführungsbeispiel eine Gruppe von UMTS-Ereignissen im GSM-Slot_{K} und im GSM-Slot_{K+1} freigegeben. Indem das Synchronisationssignal SY2b von einem niedrigen Pegel auf einen hohen Pegel wechselt, wird eine Gruppe von UMTS-Ereignissen vom GSM-Slot_{K+2} bis zum GSM-Slot_{K+7} während der UMTS-Unterbrechungsphase in der Zeitdauer zwischen T₁ und T₂ gesperrt. Durch einen weiteren Pegelwechsel des Synchronisationssignals SY2b wird diese Gruppe von UMTS-Ereignissen im GSM-Slot_{K+8} wieder freigegeben. Durch die im Ausführungsbeispiel dargestellten Pegelzustände des Synchronisationssignals SY4b wird eine Gruppe von GSM-Ereignissen vor dem Zeitpunkt T₁ und nach dem Zeitpunkt T₂ gesperrt. Während der Zeitdauer der UMTS-Unterbrechungsphase ist eine Gruppe von GSM-Ereignissen während dem UMTS-Slot_{N+1} bis zum UMTS-Slot_{N+3} freigegeben.

Durch die erfindungsgemäße Vorrichtung und das erfindungsgemäße Verfahren kann eine optimale Ablaufsteuerung von Synchronisationsvorgängen vor, während und nach UMTS-GSM-Unterbrechungsphasen in kombinierten UMTS/GSM-Mobilstationen durchgeführt werden. Zur Ablaufsteuerung von Synchronisationsvorgängen und zur Ereignissteuerung wird im UMTS-System eine Zeitsteuereinheit 1 basierend auf einer UMTS-Systeminformation verwendet, während im GSM-System eine Zeitsteuereinheit 3 basierend auf der GSM-Systeminformation verwendet wird. Die jeweilige UMTS-Systeminformation wird dem GSM-System übermittelt und entsprechend die jeweilige GSM-Systeminformation dem UMTS-System übermittelt. Durch die UMTS-Synchronisationssignale SY2a, SY2b bzw. die GSM-Synchronisationssignale SY4a, SY4b sowie die Speichereinheiten 11, 12, 31 kann eine zeitgenaue Abspeicherung der GSM-Systeminformation bzw. der UMTS-Systeminformation sowie die Kontrolle von in Gruppen zusammengefassten GSM-Ereignissen bzw. UMTS-Ereignissen durchgeführt werden, um die Ablaufsteuerung von Synchronisationsvorgängen vor, während und nach UMTS/GSM-Unterbrechungsphasen optimal kontrollieren zu können. Das heißt, es können speziell gekennzeichnete UMTS-Ereignisse (Gruppe) von der GSM-Zeitsteuereinheit 3 oder speziell gekennzeichnete GSM-Ereignisse (Gruppe) von der UMTS-Zeitsteuereinheit 1 freigegeben oder gesperrt werden. Insbesondere dann, wenn das UMTS-System und das GSM-System gleichzeitig in Betrieb sind, d.h. vor, während und nach UMTS-Unterbrechungsphasen durch das GSM-System bzw. vor, während und nach GSM-Unterbrechungsphasen durch das UMTS-System, muss dem GSM-System die UMTS-Systeminformation bzw. dem UMTS-System die GSM-Systeminformation bekannt sein. Dadurch kann eine optimale Ablaufsteuerung der UMTS- und der GSM-Synchronisationsvorgänge garantiert werden und beispielsweise vermieden werden, dass das UMTS-System und das GSM-System in einer kombinierten UMTS/GSM-Mobilstation gleichzeitig senden. Das erfindungsgemäße Verfahren und die erfindungsgemäße Vorrichtung kann unabhängig von den im UMTS-und im GSM-System verwendeten jeweiligen Symboltaktfrequenzen und physikalischen Arbeitstakten verwendet werden.

### Bezugszeichenliste

- 1, 3: Zeitsteuereinheiten
- 2, 4: Signalgeneratoren
- 21, 22: Einheiten des Signalgenerators 2
- 41: Einheit des Signalgenerators 4
- 11, 12: Speichereinheiten der Zeitsteuereinheit 1
- 31: Speichereinheit der Zeitsteuereinheit 3

- SST1, ..., SST4, SSC: Schnittstellen
- SA1, SA2, SA3: Steuersignale
- 211, 221, 411: Ereignissignale
- SY2a, SY2b: Synchronisationssignale des ersten Funksystems
- SY4a, SY4b: Synchronisationssignale des zweiten Funksystems
- T₁, T₂: Zeitpunkte von Beginn und Ende einer Unterbrechungsphase

## Patentansprüche

1. Verfahren zum Steuern von Funksystemen in einer Mobilfunkstation, wobei die Mobilfunkstation zum Senden/Empfangen von Signalen von zumindest zwei Funkstandards mit differierenden Zeitrastern ausgelegt ist und in jedem Funksystem Signale eines Funkstandards verarbeitet werden,
**dadurch gekennzeichnet, dass**
- im ersten und/oder zweiten Funksystem zum Synchronisieren der Funksysteme jeweils zumindest ein Synchronisationssignal (SY2a, SY2b; SY4a, SY4b) erzeugt und an das jeweils andere Funksystem übertragen wird, und
- in jeweils demjenigen Funksystem, an das das Synchronisationssignal (SY2a, SY2b; SY4a, SY4b) übertragen wird, eine eigene Systeminformation gespeichert wird, welche zum Synchronisieren der Funksysteme dient.

2. Verfahren nach Anspruch 1,
**dadurch gekennzeichnet, dass**
der Zeitpunkt, zu dem das Speichern der Systeminformation in einem der Funksysteme beginnt, durch das andere Funksystem mittels des Synchronisationssignals (SY2a; SY4a) vorgegeben wird.

3. Verfahren nach einem der Ansprüche 1 oder 2,
**dadurch gekennzeichnet, dass**
das von einem Funksystem erzeugte Synchronisationssignal (SY2a; SY4a) an eine Zeitsteuereinheit (1; 3) in dem anderen Funksystem angelegt wird und die Systeminformation in einer Speichereinheit (11, 12; 31) der Zeitsteuereinheit (1; 3) gespeichert wird.

4. Verfahren nach einem der vorhergehenden Ansprüche,
**dadurch gekennzeichnet, dass**
das Synchronisationssignal (SY2a, SY2b; SY4a, SY4b) eines Funksystems in einem Signalgenerator (2; 4) erzeugt wird.

5. Verfahren nach Anspruch 4,
**dadurch gekennzeichnet, dass**
der Signalgenerator (2; 4) und das Erzeugen des Synchronisationssignals (SY2a, SY2b; SY4a, SY4b) durch die Zeitsteuereinheit (1; 3) des jeweiligen Funksystems gesteuert wird.

6. Verfahren nach einem der vorhergehenden Ansprüche,
**dadurch gekennzeichnet, dass**
die zu einem vom ersten Funksystem vorgegebenen Zeitpunkt in dem zweiten Funksystem abgespeicherte Systeminformation des zweiten Funksystems vom ersten Funksystem gelesen wird.

7. Verfahren nach Anspruch 6,
**dadurch gekennzeichnet, dass**
mittels dieser gelesenen Systeminformation des zweiten Funksystems in dem ersten Funksystem Zeitpunkte zum Datenaustausch der Funkstation mit anderen Funkstationen von Signalen des ersten Funksystems ermittelt werden.

8. Verfahren nach einem der vorhergehenden Ansprüche,
**dadurch gekennzeichnet, dass**
als Systeminformation die Rahmennummer (Frame_{RX}, Frame_{TX,} Frame_{GSM}) eines Datenübertragungsrahmens und/oder eine Nummer eines Zeitschlitzes (Slot_{RX}, Slot_{TX}, Slot_{GSM}) der einem Datenübertragungsrahmen zugeordnet ist und/oder die Nummer einer Einheit (Chip; Symbol), in die ein Zeitschlitz unterteilt wird, abgespeichert wird.

9. Verfahren nach einem der vorhergehenden Ansprüche,
**dadurch gekennzeichnet, dass**
im ersten und/oder zweiten Funksystem jeweils ein zweites Synchronisationssignal (SY2b; SY4b) erzeugt wird, das zweite Synchronisationssignal (SY2b; SY4b) an das jeweils andere Funksystem angelegt wird und in diesem jeweils anderen Funksystem, zu einem durch das anliegende zweite Synchronisationssignal (SY2b; SY4b) vorgebbaren Zeitpunkt des Funksystems, welches dieses zweite Synchronisationssignal (SY2b; SY4b) erzeugt, das Senden eines Funksignals oder das Erzeugen eines Ereignisses im Funksystem, an dem das zweite Synchronisationssignal (SY2b; SY4b) angelegt wird, freigegeben oder gesperrt wird.

10. Verfahren nach Anspruch 9,
**dadurch gekennzeichnet, dass**
die zweiten Synchronisationssignale (SY2b; SY4b) in den jeweiligen Signalgeneratoren (2; 4) der Funksysteme erzeugt werden und an die Signalgeneratoren (2; 4) des jeweils anderen Systems angelegt werden.

11. Verfahren nach einem der Ansprüche 9 oder 10,
**dadurch gekennzeichnet, dass**
in jedem Funksystem die beiden Synchronisationssignale (SY2a, SY2b; SY4a, SY4b) in ein einziges Signal zusammengefasst werden und die Informationen zum Synchronisieren und die Informationen zum Freigeben oder Sperren eines Sendevorgangs oder eines Ereignisses kodiert werden.

12. Verfahren nach einem der vorhergehenden Ansprüche,
**dadurch gekennzeichnet, dass**
sowohl die Systeminformation für den Sende- als auch für den Empfangspfad eines Funksystems separiert voneinander abgespeichert werden.

13. Verfahren nach einem der vorhergehenden Ansprüche,
**dadurch gekennzeichnet, dass**
der erste Funkstandard der Mobilfunkstandard UMTS und der zweite Funkstandard der Mobilfunkstandard GSM/EDGE ist.

14. Vorrichtung zum Steuern von Funksystemen in einer Mobilfunkstation, wobei die Mobilfunkslation zum Senden/Empfangen von Signalen von zumindest zwei Funkstandards mit differierenden Zeitrastern ausgelegt ist,
**gekennzeichnet durch**
- eine erste Steuereinheit (1) und einen dieser ersten Steuereinheit (1) nachgeschalteten ersten Signalgenerator (2), die dem ersten Funksystem zugeordnet sind, zur Erzeugung zumindest eines ersten Synchronisationssignals (SY2a, SY2b) des ersten Funksystems und zur Übertragung des ersten Synchronisationssignals (SY2a, SY2b) an das zweite Funksystem,
- eine zweite Steuereinheit (3) und einen dieser zweiten Steuereinheit (3) nachgeschalteten zweiten Signalgenerator (4), die dem zweiten Funksystem zugeordnet sind, zur Erzeugung zumindest eines ersten Synchronisationssignals (SY4a, SY4b) des zweiten Funksystems und zur Übertragung des zweiten Synchronisationssignals (SY4a, SY4b) an das erste Funksystem, wobei
- die erste und die zweite Steuereinheit (1; 3) zumindest jeweils eine Speichereinheit (11, 12; 31) zum Speichern einer zum Synchronisieren der Funksysteme dienenden eigenen Systeminformation aufweisen, und
- der erste Signalgenerator (2) mit dem zweiten Funksystem und der zweite Signalgenerator (4) mit dem ersten Funksystem elektrisch verbunden ist.

15. Vorrichtung nach Anspruch 14,
**dadurch gekennzeichnet, dass**
zumindest in einem Funksystem die Steuereinheit (1) eine zweite Speichereinheit (12) aufweist und in der ersten Speichereinheit (11) eine Systeminformation des Datenempfangspfades und in der zweiten Speichereinheit (12) eine Systeminformation des Datensendepfades speicherbar ist.

16. Vorrichtung nach einem der Ansprüche 14 oder 15,
**dadurch gekennzeichnet, dass**
der erste Signalgenerator (2) mit einem ersten Eingang des zweiten Signalgenerators (4) und mit der ersten Speichereinheit (31) des zweiten Funksystems, und der zweite Signalgenerator (4) mit einem Eingang des ersten Signalgenerators (2) und mit der ersten Speichereinheit (11, 12) des ersten Funksystems, elektrisch verbunden ist.

17. Vorrichtung nach einem der Ansprüche 14 bis 16,
**dadurch gekennzeichnet, dass**
die Funksysteme durch eine elektrische Verbindung, insbesondere eine synchrone serielle Schnittstelle (SSC), verbunden sind, über die der Inhalt der Speichereinheiten (11, 12; 31), des einen Funksystems durch das andere Funksystem abfragbar sind.

18. Vorrichtung nach einem der Ansprüche 14 bis 17,
**dadurch gekennzeichnet, dass**
die Steuereinheit (1) und die zumindest erste Speichereinheit (11, 12) des ersten Funksystems mittels einer Schnittstelle (SST1) mit dem Bus-System des ersten Funksystems und die zweite Steuereinheit (3) und die zumindest erste Speichereinheit (31) des zweiten Funksystems mittels einer weiteren Schnittstelle (SST3) mit dem Bus-System des zweiten Funksystems verbunden sind.

## Claims

1. Method for controlling radio systems in a mobile radio station, with the mobile radio station being designed for transmission/reception of signals based on at least two radio standards with different time patterns and signals based on one radio standard being processed in each radio system, **characterized in that**
- at least one synchronization signal (SY2a, SY2b; SY4a, SY4b) in each case being produced in the first and/or second radio system for synchronization of the radio systems and is transmitted to the respective other radio system, and
- suitable system information is in each case stored **in that** radio system to which the synchronization signal (SY2a, SY2b; SY4a, SY4b) is transmitted, and is used for synchronizing the radio systems.

2. Method according to Claim 1, **characterized in that** the time at which the storage of the system information in one of the radio systems starts is predetermined by the other radio system by means of the synchronization signal (SY2a; SY4a).

3. Method according to one of Claims 1 or 2, **characterized in that** the synchronization signal (SY2a; SY4a) which is produced by one radio system is passed to a time control unit (1; 3) in the other radio system, and the system information is stored in a memory unit (11, 12; 31) in the time control unit (1; 3).

4. Method according to one of the preceding claims, **characterized in that** the synchronization signal (SY2a, SY2b; SY4a, SY4b) for a radio system is produced in a signal generator (2; 4).

5. Method according to Claim 4, **characterized in that** the signal generator (2; 4) and the production of the synchronization signal (SY2a, SY2b; SY4a, SY4b) are controlled by the time control unit (1; 3) for the respective radio system.

6. Method according to one of the preceding claims, **characterized in that** the system information (which is stored in the second radio system at a time which is predetermined by the first radio system) for the second radio system is read by the first radio system.

7. Method according to Claim 6, **characterized in that** times for interchanging data between the radio station and other radio stations are determined from signals from the first radio system by means of this system information, which has been read from the second radio system, in the first radio system.

8. Method according to one of the preceding claims, **characterized in that** the frame number (Frame_{RX}, Frame_{TX}, Frame_{GSM}) of a data transmission frame and/or a number of a time slot (Slot_{RX}, Slot_{TX}, Slot_{GSM}) which is allocated to a data transmission frame and/or the number of a unit (Chip; Symbol) into which a time slot is subdivided are/is stored as system information.

9. Method according to one of the preceding claims, **characterized in that** a second synchronization signal (SY2b; SY4b) is in each case produced in the first and/or second radio system, the second synchronization signal (SY2b; SY4b) is passed to the respective other radio system, and the transmission of a radio signal or the production of an event in the radio system to which the second synchronization signal (SY2b; SY4b) is passed is enabled or inhibited in this respective other radio system at a time which can be predetermined by the applied second synchronization signal (SY2b; SY4b) in the radio system which produces this second synchronization signal (SY2b; SY4b).

10. Method according to Claim 9, **characterized in that** the second synchronization signals (SY2b; SY4b) are produced in the respective signal generators (2; 4) in the radio systems, and are passed to the signal generators (2; 4) in the respective other system.

11. Method according to one of Claims 9 or 10, **characterized in that** the two synchronization signals (SY2a, SY2b; SY4a, SY4b) in each radio system are combined to form a single signal, and the information for synchronization and the information for enabling or inhibiting a transmission process or an event is coded.

12. Method according to one of the preceding claims, **characterized in that** the system information items for both the transmission path and the reception path in a radio system are stored separately from one another.

13. Method according to one of the preceding claims, **characterized in that** the first radio standard is the UMTS mobile radio standard, and the second radio standard is the GSM/EDGE mobile radio standard.

14. Apparatus for controlling radio systems in a mobile radio station, with the mobile radio station being designed for transmission/reception of signals based on at least two radio standards with different time patterns, **characterized by**
- a first control unit (1) and a first signal generator (2) which is connected downstream from this first control unit (1), which are associated with the first radio system, in order to produce at least one first synchronization signal (SY2a, SY2b) for the first radio system and in order to transmit the first synchronization signal (SY2a, SY2b) to the second radio system,
- a second control unit (3) and a second signal generator (4) which is connected downstream from this second control unit (3), which are associated with the second radio system, in order to produce at least one first synchronization signal (SY4a, SY4b) for the second radio system and in order to transmit the second synchronization signal (SY4a, SY4b) to the first radio system,
- with the first and the second control unit (1; 3) each having at least one memory unit (11, 12; 31) in order to store suitable system information used for synchronization of the radio systems, and
- the first signal generator (2) being electrically connected to the second radio system and the second signal generator (4) being electrically connected to the first radio system.

15. Apparatus according to Claim 14, **characterized in that**, at least in one radio system, the control unit (1) has a second memory unit (12) and system information relating to the data reception path can be stored in the first memory unit (11), and system information relating to the data transmission path can be stored in the second memory unit (12).

16. Apparatus according to one of Claims 14 or 15, **characterized in that** the first signal generator (2) is electrically connected to a first input of the second signal generator (4) and to the first memory unit (31) in the second radio system, and the second signal generator (4) is electrically connected to one input of the first signal generator (2) and to the first memory unit (11, 12) in the first radio system.

17. Apparatus according to one of Claims 14 to 16, **characterized in that** the radio systems are connected by means of an electrical connection, in particular a synchronous serial interface (SSC), via which the contents of the memory units (11, 12; 31) in one radio system can be checked by the other radio system.

18. Apparatus according to one of Claims 14 to 17, **characterized in that** the control unit (1) and the at least one first memory unit (11, 12) in the first radio system are connected by means of an interface (SST1) to the bus system for the first radio system, and the second control unit (3) and the at least first memory unit (31) in the second radio system are connected by means of a further interface (SST3) to the bus system for the second radio system.

## Revendications

1. Procédé de commande de systèmes radio dans une station de téléphonie mobile, la station de téléphonie mobile étant conçue pour l'émission/réception de signaux d'au moins deux normes radio ayant des trames de temps différentes et des signaux d'une norme radio étant traités dans chaque système radio,
**caractérisé en ce que**
- on produit dans le premier et/ou dans le deuxième système radio pour la synchronisation du système radio respectivement au moins un signal (SY2a, SY2b ; SY4a, SY4b) de synchronisation et on le transmet à l'autre système radio, et
- on mémorise dans le système radio auquel le signal (SY2a, SY2b ; SY4a, SY4b) de synchronisation a été transmis une information propre de système, qui sert à la synchronisation des systèmes radio.

2. Procédé suivant la revendication 1, **caractérisé en ce que** l'on prescrit l'instant où commence la mémorisation de l'information de système dans l'un des systèmes radio par l'autre système radio au moyen du signal (SY2a ; SY4a) de synchronisation.

3. Procédé suivant l'une des revendications 1 ou 2, **caractérisé en ce que** l'on applique le signal (SY2a ; SY4a) de synchronisation produit par un système radio à une unité (1 ; 3) de commande de temps de l'autre système radio et l'on mémorise l'information de système dans une unité (11, 12 ; 31) de mémoire de l'unité (1 ; 3) de commande de temps.

4. Procédé suivant l'une des revendications précédentes, **caractérisé en ce que** l'on produit le signal (SY2a, SY2b ; SY4a, SY4b) de synchronisation d'un système radio dans un générateur (2 ; 4) de signal.

5. Procédé suivant la revendication 4, **caractérisé en ce que** l'on commande le générateur (2 ; 4) de signal et la production du signal (SY2a, SY2b ; SY4a, SY4b) de synchronisation par l'unité (1 ; 3) de commande de temps du système radio respectif.

6. Procédé suivant l'une des revendications précédentes, **caractérisé en ce qu'**on lit par le premier système radio, à un instant prescrit par le premier système radio, l'information de système du deuxième système radio mémorisée dans le deuxième système radio.

7. Procédé suivant la revendication 6, **caractérisé en ce qu'**au moyen de cette information de système du deuxième système radio, qui est lue, on détermine par des signaux du premier système radio des instants d'échange de données de la station radio avec d'autres stations radio.

8. Procédé suivant l'une des revendications précédentes, **caractérisé en ce que** l'on associe comme information de système les numéros de trame (Frame_{RX}, Frame_{TX}, Frame_{GSM}) d'une trame de transmission de données et/ou un numéro d'un créneau temporel (Slot_{RX}, Slot_{TX}, Slot_{GSM}) de la trame de transmission de données et/ou on mémorise le numéro d'une unité (puce ; symbole) dans laquelle un créneau temporel est subdivisé.

9. Procédé suivant l'une des revendications précédentes, **caractérisé en ce que** l'on produit, dans le premier et/ou le deuxième système radio, respectivement un deuxième signal (SY2b ; SY4b) de synchronisation, on applique le deuxième signal (SY2b ; SY4b) de synchronisation à l'autre système radio et, dans cet autre système radio, on libère et/ou on bloque, à un instant pouvant être prescrit par le deuxième signal (SY2b ; SY4b) de synchronisation appliqué du système radio qui produit ce deuxième signal (SY2b ; SY4b) de synchronisation, l'émission d'un signal radio ou la production d'un événement dans le système radio auquel est appliqué le deuxième signal (SY2b ; SY4b) de synchronisation.

10. Procédé suivant la revendication 9, **caractérisé en ce que** l'on produit les deuxièmes signaux (SY2b ; SY4b) de synchronisation dans les générateurs (2 ; 4) de signal respectifs des systèmes radio et on les applique aux générateurs (2 ; 4) de signal de l'autre système, respectivement.

11. Procédé suivant l'une des revendications 9 ou 10, **caractérisé en ce que**, dans chaque système radio, on rassemble les deux signaux (SY2a, SY2b ; SY4a, SY4b) de synchronisation en un signal unique et on code les informations de synchronisation et les informations de libération de blocage d'une opération d'émission ou d'un événement.

12. Procédé suivant l'une des revendications précédentes, **caractérisé en ce que** l'on mémorise séparément l'une de l'autre tant l'information de système pour le trajet d'émission que celle pour le trajet de réception d'un signal radio.

13. Procédé suivant l'une des revendications précédentes, **caractérisé en ce que** la première norme radio est la norme de téléphonie mobile UMTS et la deuxième norme radio est la norme de téléphonie mobile GSM/EDGE.

14. Dispositif de commande de système radio dans un poste de téléphonie mobile, le poste de téléphonie mobile étant conçu pour l'émission/réception de signaux d'au moins deux normes radio ayant des trames de temps différentes,
**caractérisé par** :
- une première unité (1) de commande et un premier générateur (1) de signal monté en aval de cette première unité (1) de commande qui sont associés au premier système radio pour la production d'au moins un premier signal (SY2a, SY2b) de synchronisation du premier système radio et pour la transmission du premier signal (SY2a, SY2b) de synchronisation au deuxième système radio,
- une deuxième unité (3) de commande et un deuxième générateur (4) de signal monté en aval de cette deuxième unité (3) de commande qui sont associés au deuxième système radio pour la production d'au moins un premier signal (SY4a, SY4b) de synchronisation du deuxième système radio et pour la transmission du deuxième signal (SY4a, SY4b) de synchronisation au premier système radio, dans lequel
- la première et la deuxième unité (1 ; 3) de commande ont au moins respectivement une unité (11, 12 ; 31) de mémorisation d'une information propre de système servant à la synchronisation du système radio, et
- le premier générateur (2) de signal est relié électriquement au deuxième système radio et le deuxième générateur (4) de signal est relié électriquement au premier système radio.

15. Dispositif suivant la revendication 14,
**caractérisé en ce qu'**au moins dans un système radio, l'unité (1) de commande a une deuxième unité (12) de mémoire et, dans la première unité (11) de mémoire, peut être mémorisée une information de système du trajet de réception de données et, dans la deuxième unité (12) de mémoire, une information de système du trajet d'émission de données.

16. Dispositif suivant l'une des revendications 14 ou 15, **caractérisé en ce que** le premier générateur (2) de signal est relié électriquement à une première entrée du deuxième générateur (4) de signal et à la première unité (31) de mémoire du deuxième système radio et le deuxième générateur (4) de signal est relié électriquement à une entrée du premier générateur (2) de signal et à la première unité (11, 12) de mémoire du premier système radio.

17. Dispositif suivant l'une des revendications 14 à 16, **caractérisé en ce que** les systèmes radio sont reliés par une liaison électrique, notamment par une interface (SSC) synchrone séquentielle, par laquelle le contenu des unités (11, 12 ; 31) de mémoire de l'un des systèmes radio peut être demandé par l'autre système radio.

18. Dispositif suivant l'une des revendications 14 à 17, **caractérisé en ce que** l'unité (1) de commande et la au moins première unité (11, 12) de mémoire du premier système radio sont reliées au moyen d'une interface (SST1) au système de bus du premier système radio et la deuxième unité (3) de mémoire et la au moins première unité (31) de mémoire du deuxième système radio sont reliées au moyen d'une autre interface (SST3) au système de bus du deuxième système radio.
